# EUROPÄISCHE PATENTSCHRIFT

(11) **EP 1 985 522 B1**
(45) Veröffentlichungstag und Bekanntmachung des Hinweises auf die Patenterteilung: **28.03.2012**
(21) Anmeldenummer: 08100798.1
(22) Anmeldetag: 23.01.2008
(51) Int. Cl.: B62D 5/04

(54) **Schutzeinrichtung für eine Hilfskraftlenkung**
Protective device for a power steering mechanism
Dispositif de protection pour une direction assistée

(30) Priorität: 24.04.2007 DE 102007019257
(43) Veröffentlichungstag der Anmeldung: 29.10.2008
(73) Patentinhaber: ZF-Lenksysteme GmbH, 73527 Schwäbisch Gmünd (DE)
(72) Erfinder: Leutner, Wilfried, 73527, Schwäbisch Gmünd (DE)

(56) Entgegenhaltungen:
- EP-A- 1 228 942
- EP-A- 1 400 434
- EP-A- 1 542 339
- EP-A- 1 561 670

## Beschreibung

Die Erfindung betrifft eine Schutzeinrichtung für eine Hilfskraftlenkung, eine solche Hilfskraftlenkung und ein Verfahren zum Schutz für eine Hilfskraftlenkung.

Bei Hilfskraftlenkungen kann es bei hohen Bewegungsgeschwindigkeiten der Räder zu Problemen kommen. So wird bspw. in einer Kfz-Werkstatt die Lenkung oft durch Drehen der Räder des Kraftfahrzeugs bewegt, während die Hilfskraftlenkung abgeschaltet ist. Bei genügend Kraftaufwand kann die Lenkung so beschleunigt werden, dass eine sehr hohe Lenkgeschwindigkeit erreicht wird. Diese liegt weit oberhalb der Lenkgeschwindigkeit, die im regulären Betrieb auftritt. Die mit den Rädern betrieblich verbundenen Teile der Lenkung erhalten dadurch hohe Drehzahlen.

Wenn die Lenkung mit hoher Lenkgeschwindigkeit am Lenkanschlag anschlägt, werden alle Bauteile stark abgebremst. Durch die starke Verzögerung der Zahnstange und den getrieblich damit verbundenen Elektromotor kann es zu sehr hohen Momenten und Kräften an Getriebe und Elektromotor kommen. Diese Momente und Kräfte können so hoch sein, dass die Bauteile beschädigt werden.

Je höher die Geschwindigkeit ist, mit der der Anschlag erreicht wird, desto höher ist die Gefahr einer Beschädigung. Die hohen Drehzahlen können zwar im Betrieb durch geeignete Ansteuerung des Motors vermieden werden, indem man durch aktiven Eingriff hohe Drehzahlen verhindert, das ist jedoch nicht im abgeschalteten Zustand möglich. In diesem Zustand sind Beschädigungen wahrscheinlich, sofern keine anderen Maßnahmen getroffen werden.

Es ist weiterhin zu beachten, dass bei Lenkungen mit elektrischer Sternpunktauftrennung über Feldeffekttransistoren und Synchronmotor der Motor bei hoher Drehzahl soviel Spannung generiert, dass die Feldeffekttransistoren des Sternpunkts in den Avalanchebetrieb gehen. Dann wird ein großer Teil der vom Werkstattmonteur eingebrachte Energie in den Sternpunkt-Feldeffekttransistoren in Wärme umgesetzt. Das kann dazu führen, dass die Feldeffekttransistoren thermisch zerstört werden.

Aus der Druckschrift DE 100 13 133 A1, als Oberbegriff, ist eine Schutzeinrichtung für eine elektrische Lenkung bekannt. Bei dieser ist der Elektromotor der Hilfskraftlenkung mit einer Bremsschaltung verbunden, die den Motor mit einer elektrischen Last beaufschlagt, wenn die Drehzahl einen vorgegebenen Wert übersteigt.

Nachteilig bei der in der Druckschrift beschriebenen Schutzeinrichtung ist, dass diese nur bei Gleichstrommotoren funktioniert. Bei Elektrolenkungen größerer Leistung werden jedoch in der Regel permanent erregte Synchronmotoren verwendet. Aus Sicherheitsgründen ist vorgesehen, dass der Sternpunkt im abgeschalteten Zustand aufgetrennt wird.

Ein Durchschalten der Endstufe, wie in der Druckschrift vorgeschlagen, zeigt bei einer Relaisauftrennung keinen Effekt, weil der aufgetrennte Sternpunkt keinen Strom führt und damit kein Bremsen des Motors zulässt.

Im Normalbetrieb muss diese Einrichtung abgeschaltet werden, weil das System sonst nicht funktioniert (bspw. Abschaltrelais). Diese Abschalteinrichtung kann selbst fehlerhaft werden, wodurch die Verfügbarkeit der Lenkung herabgesetzt wird.

Es stellt sich somit die Aufgabe, eine Schutzeinrichtung vorzuschlagen, die auch bei einem Synchronmotor mit Sternpunktauftrennung einsetzbar ist.

Die erfindungsgemäße Schutzeinrichtung für eine Hilfskraftlenkung eines Kraftfahrzeugs, wobei die Hilfskraftlenkung ein Steuergerät, einen Elektromotor mit Sternpunktauftrennung und ein Getriebe aufweist, umfasst eine Schaltung, die mit dem Elektromotor verbunden ist und die Sternpunktauftrennung schließt, wenn die Drehzahl des Synchronmotors einen vorgegebenen Wert übersteigt.

Mit der erfindungsgemäßen Schutzeinrichtung ist somit der Motor mit einer Schaltung verbunden, die die Sternpunktauftrennung schließt, wenn die Drehzahl des Motors einen vorgegebenen Wert übersteigt. Dabei kann darauf geachtet werden, dass der vorgegebene Drehzahlwert mindestens so hoch ist, dass der Fahrer das Fahrzeug auch bei abgeschalteter Elektronik, bspw. im Fehlerfall, noch sicher lenken kann. In Ausgestaltung ist der Drehzahlwert so hoch, dass der Fahrer noch mit mindestens 90°/s am Lenkrad drehen kann. Dies ist insbesondere von Bedeutung, wenn zusätzlich FETs einer Leistungsendstufe zu schließen sind.

In Ausgestaltung wird für die vom Motor generierte Spannung ein geschlossener Stromkreis geschaffen, so dass der Sternpunkt überbrückt wird. Der Stromkreis kann bspw. dadurch gebildet werden, dass eine elektrische Verbindung zwischen mindestens einem Motoranschluss und dem Sternpunkt geschaffen wird.

Ist die generierte Motorspannung geglättet, kann diese als ein Referenzsignal für die Drehzahl dienen.

Die generierte Spannung kann direkt zum Schließen der Feldeffekttransistoren genutzt werden.

Alternativ kann die generierte Spannung, die geglättet sein kann, zum Schalten einer zweiten Spannung, wie bspw. einer Batteriespannung, genutzt werden.

In Ausgestaltung werden Phasen des Synchronmotors auf Seiten des Sternpunkts im Vergleich zu den Wicklungen hochohmig angeschlossen. Dies kann durch gegeneinander Anschließen durch Widerstände vor der Sternpunktauftrennung, gegeneinander Anschließen durch Widerstände zwischen Phase und Sternpunkt, durch Anschließen gegen Masse durch Widerstände vor der Sternpunktauftrennung oder durch Anschließen gegen Masse durch einen Widerstand im Sternpunkt erfolgen. Allerdings ist der Einsatz zusätzlicher Widerstände aufgrund der parasitären Dioden bzw. Body-Dioden der Feldeffekttransistoren nicht unbedingt notwendig.

Eine Hilfskraftlenkung mit einem Synchronmotor, der zur Lenkmomentunterstützung vorgesehen ist, wobei eine Auftrennung im Sternpunkt des Synchronmotors vorzunehmen ist, zeichnet sich dadurch aus, dass eine Schutzeinrichtung, insbesondere eine Schutzeinrichtung der vorstehend beschriebenen Art, vorgesehen ist, die eine Schaltung aufweist, die die Auftrennung schließt, wenn die Drehzahl des Synchronmotors einen vorgegebenen Wert übersteigt.

Bei der beschriebenen Hilfskraftlenkung kommt in Ausgestaltungen eine Schutzeinrichtung mit den vorstehend beschriebenen Merkmalen zum Einsatz.

Das erfindungsgemäße Verfahren dient zum Schutz für eine Hilfskraftlenkung, die einen Synchronmotor umfasst, wobei eine Auftrennung im Sternpunkt des Synchronmotors vorzunehmen ist, und ist dadurch gekennzeichnet, dass eine Schaltung einer Schutzeinrichtung, insbesondere eine Schutzeinrichtung der vorstehend beschriebenen Art, die Auftrennung schließt, wenn die Drehzahl des Synchronmotors einen vorgegebenen Wert übersteigt.

In Ausgestaltung des Verfahrens wird eine generierte Motorspannung auf Seiten der Leistungsendstufe geglättet. Dabei wird mindestens eine Phase verwendet. Es können auch zwei oder alle Phasen verwendet werden. Bei einer bestimmten, vorgebbaren Höhe der geglätteten Spannung, die ein Maß für die Drehzahl darstellt bzw. als Referenzsignal für die Drehzahl dient, wird der Sternpunkt geschlossen. Üblicherweise wird die geglättete Spannung hierzu unmittelbar verwendet, oder die geglättete Spannung wird genutzt, um die Bordnetzspannung zum Schließen des Sternpunkts zu schalten.

Mit dem beschriebenen Verfahren wird der Motor nach oder beim Schließen des Sternpunkts somit gebremst, wenn die generierte Spannung so hoch wird, dass die Spannung Strom über die Leistungsendstufe gegen die dort anliegende Spannung treiben kann. Dies ist bei angeschlossener Batterie die Batteriespannung. Ansonsten ist dies die Spannung der Eingangskondensatoren, die bspw. durch eine Leistungszenerdiode zwischen Plus und Masse begrenzt ist. Zu beachten ist auch, dass bei dieser Vorgehensweise keine aktive Abschaltung der Schutzbeschaltung im Normalbetrieb benötigt wird.

In einer weiteren Ausgestaltung des erfindungsgemäßen Verfahrens werden Feldeffekttransistoren, insbesondere die sogenannten Low-Side-Feldeffekttransistoren, ebenfalls kurzgeschlossen. Dies funktioniert unabhängig davon, ob die Batterie angeschlossen ist oder nicht. Allerdings muss diese Beschaltung im Normalbetrieb abgeschaltet bzw. unterbrochen werden. Aus Sicherheitsgründen sollte diese Vorgehensweise jedoch nur nach eingehender Abwägung vorgenommen werden.

Mit dem Verfahren ist somit ein wirksamer Schutz einer Hilfskraftlenkung mit einem Synchronmotor gegeben. So kann verhindert werden, dass die Feldeffekttransistoren in den Avalanchebetrieb gehen. Dabei ist sichergestellt, dass die verwendete Schaltung passiv arbeitet und somit der Mikrocontroller ohne Funktion bleibt. In Ausgestaltung ist die Schaltung derart gestaltet, dass keine Notwendigkeit besteht, diese während des Normalbetriebs abzuschalten.

Die Erfindung ermöglicht, die Drehzahl des Motors auf einen bestimmten, vorgegebenen Wert zu begrenzen. Dieser Wert sollte so niedrig sein, dass durch das Anschlagen am Endanschlag keine Beschädigung auftritt und die Feldeffekttransistoren in der Sternpunktauftrennung nicht vorher in den Avalanchebetrieb gehen. Andererseits muss die Drehzahl so hoch sein, dass im Fehlerfall des Lenksystems der Fahrer noch mit ausreichender Lenkgeschwindigkeit, bspw. > 90°/s, lenken kann.

Weitere Vorteile und Ausgestaltungen der Erfindung ergeben sich aus der Beschreibung und der beiliegenden Zeichnung.

Es versteht sich, dass die voranstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Die Erfindung ist anhand von Ausführungsbeispielen in der Zeichnung schematisch dargestellt und wird im folgenden unter Bezugnahme auf die Zeichnung ausführlich beschrieben.
- Figur 1: zeigt in einem Schaltbild eine Ausführungsform der erfindungsgemäßen Schutzeinrichtung.
- Figur 2: zeigt zu einem Ausschnitt aus Figur 1 eine alternative Ausführung.
- Figur 3: zeigt eine weitere Alternative zu Figur 2.
- Figur 4: zeigt noch eine weitere Alternative zu Figur 2.
- Figur 5: zeigt eine weitere Alternative zu Figur 2 mit einer alternativen Schaltung zum Schließen des Sternpunkts über die Batteriespannung.
- Figur 6: zeigt eine weitere Alternative zu Figur 2, bei der der Strompfad für den generierenden Motor über die Schutzbeschaltung erfolgt.
- Figur 7: zeigt eine Alternative zu Figur 6.

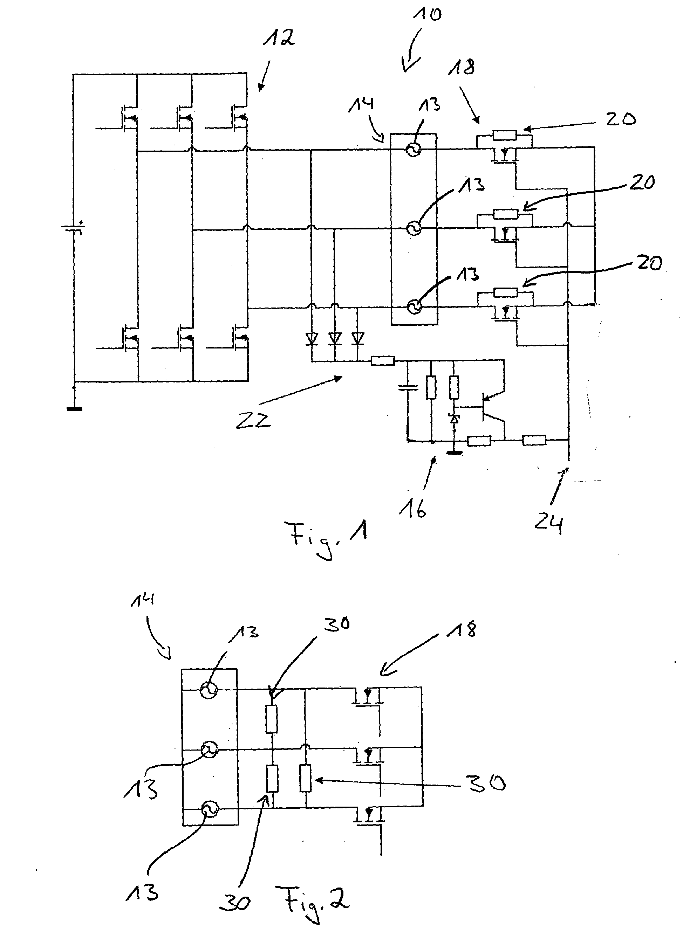

In Figur 1 ist in einem Schaltbild eine Ausführungsform der erfindungsgemäßen Schutzeinrichtung, insgesamt mit der Bezugsziffer 10 bezeichnet, dargestellt. Zu erkennen ist eine sechs Feldeffekttransistoren umfassende Leistungsendstufe 12, ein mit drei Phasen 13 ausgestatteter permanentmagneterregter Synchronmotor 14 und eine Schaltung 16 zum Schließen einer drei Feldeffekttransistoren umfassenden Sternpunktauftrennung 18.

Bei den Feldeffekttransistoren der Sternpunktauftrennung 18 sind jeweils Widerstände 20 für eine relativ hochohmige Verbindung der Motorphasen 13 des Synchronmotors 14 über den Sternpunkt vorgesehen.

Weiterhin sind drei Dioden 22 zum Gleichrichten und ein RC-Glied zum Glätten einer generierten Motorspannung auf Seiten der Leistungsendstufe 12 vorgesehen.

Die Schaltung 16 schließt die Sternpunktauftrennung 18, sobald die Drehzahl des Synchronmotors 14 einen gewissen Wert übersteigt.

Die Darstellung zeigt weiterhin einen Anschluss 24, mit dem im Normalbetrieb, in dem der Mikroprozessor arbeitet, der Sternpunkt geschlossen oder geöffnet wird.

In Figur 2 ist der Synchronmotor 14 mit der Sternpunktauftrennung 18 dargestellt, wobei drei Widerstände 30 für einen relativ hochohmigen Anschluss der Motorphasen 13 gegeneinander als Alternative für Widerstände zur relativ hochohmigen Verbindung der Motorphasen vorgesehen sind.

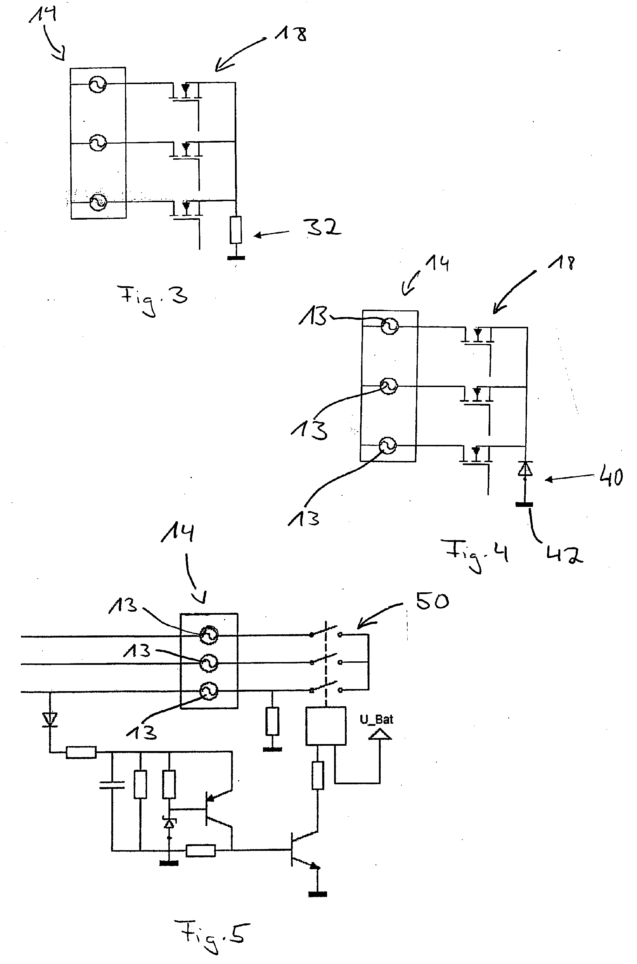

In Figur 3 ist eine weitere Alternative für Widerstände zum relativ hochohmigen Anschluss der Motorphasen dargestellt, wobei ein Widerstand 32 für einen relativ hochohmigen Anschluss der Motorphasen im Sternpunkt nach Masse vorgesehen ist. Dies ist jedoch nur sinnvoll, wenn die Batteriespannung zum Schließen des Sternpunkts geschaltet wird.

In Figur 4 ist wiederum der Synchronmotor 14 mit der Sternpunktauftrennung 18 dargestellt, wobei in dieser Ausführung eine Diode 40 zum Anschluss der Motorphasen im Sternpunkt nach Masse 42 vorgesehen ist. Dies ist wiederum nur sinnvoll, wenn die Batteriespannung zum Schließen des Sternpunkts geschaltet wird.

In Figur 5 ist dargestellt, wie eine Batteriespannung U_B anstelle einer direkten Verwendung der geglätteten Spannung eingesetzt wird. Weiterhin sind Relais 50 anstelle der Feldeffekttransistoren für die Sternpunktauftrennung vorgesehen. Alternativ kann die Spannung nur einer Motorphase verwendet werden.

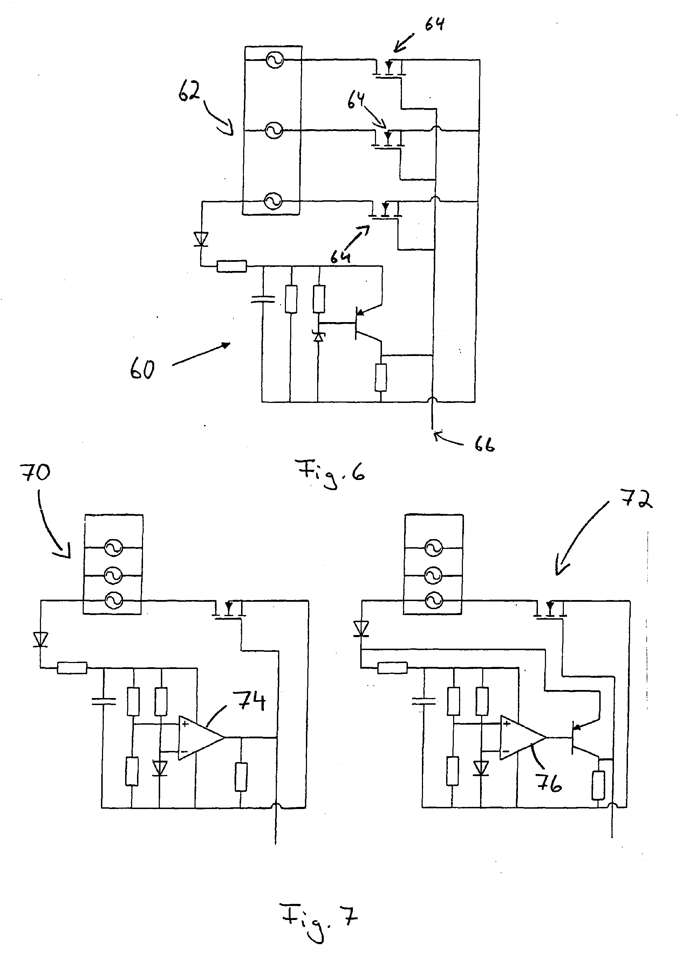

In Figur 6 ist die Schutzschaltung 16 aus Figur 1 in einer modifizierten Ausführung, insgesamt mit der Bezugsziffer 60 bezeichnet, dargestellt. Bei dieser Ausführung sind keine zusätzlichen Bauteile im Bereich des Motors 62 und der Sternpunkt-Feldeffekttransistoren 64 vorgesehen. Dabei wird zum Schließen des Stromkreises der generierten Motorspannung die Body-Diode der Sternpunkt-FETs genutzt. Dies wird dadurch möglich, dass die Schutzschaltung 60 zwischen Motorausgang und Sternpunkt geschaltet ist.

In der dargestellten Ausführung wird nur eine Motorphase genutzt. Alternativ können die beiden anderen Phasen ebenfalls per Diode an die Schaltung 60 angeschlossen werden.

Weiterhin ist der Darstellung der Anschluss 66 zum Schließen und Öffnen des Sternpunkts zu entnehmen.

In Figur 7 sind zwei weitere Varianten 70 und 72 der Schutzschaltung dargestellt. Wie bei der Schutzschaltung 60 aus Figur 6 sind auch bei den Schaltungen 70 und 72 keine zusätzlichen Bauteile im Bereich des Motors und der Sternpunkt-FETs vorgesehen. Zum schließen des Stromkreises der generierten Motorspannung wird dabei die Body-Diode der Sternpunkt-FETs genutzt. Das ist durchführbar, da die Schutzschaltungen 70 und 72 jeweils zwischen Motorausgang und Sternpunkt geschaltet sind.

Die Schutzschaltung 70 verwendet einen Komparator 74 mit Push-Pull-Ausgang. Die Schutzschaltung 72 setzt einen Komparator mit open-collector-Ausgang ein.

Bei den Schutzschaltungen 70 und 72 wird jeweils nur eine Motorphase genutzt. Alternativ können die beiden anderen Phasen ebenfalls per Diode an die Schaltung 70 bzw. 72 angeschlossen werden.

## Patentansprüche

1. Schutzeinrichtung für eine Hilfskraftlenkung eines Kraftfahrzeugs, wobei die Hilfskraftlenkung einen Elektromotor (14) mit Sternpunktauftrennung (18) aufweist, mit einer Schaltung, die mit dem Elektromotor (14) verbunden ist, **dadurch gekennzeichnet, dass**
die Schaltung die Sternpunktauftrennung (18) kann schließen, wenn die Drehzahl des Elektromotors (14) einen vorgegebenen Wert übersteigt.

2. Schutzeinrichtung nach Anspruch 1, bei der zusätzlich Feldeffekttransistoren einer Leistungsendstufe zu schließen sind.

3. Schutzeinrichtung nach Anspruch 1 oder 2, bei der die vorgegebene Drehzahl so gewählt ist, dass das Kraftfahrzeug auch bei abgeschalteter Elektronik noch sicher zu lenken ist.

4. Schutzeinrichtung nach Anspruch 3, bei der die vorgegebene Drehzahl so gewählt ist, dass ein Lenkrad mit mindestens 90°/s gedreht werden kann.

5. Schutzeinrichtung nach einem der Ansprüche 1 bis 4, bei der die Schaltung derart ausgestaltet ist, dass sich für eine von dem Elektromotor generierte Spannung ein geschlossener Stromkreis ergibt.

6. Schutzeinrichtung nach Anspruch 5, bei der die Motorspannung geglättet ist und als ein Referenzsignal für die Drehzahl dient.

7. Schutzschaltung nach Anspruch 4 oder 5, bei der die generierte Spannung zum Schließen der Feldeffekttransistoren des Sternpunkts zu nutzen ist.

8. Schutzeinrichtung nach Anspruch 4 oder 5, bei der die generierte Spannung zum Schalten einer zweiten Spannung zu nutzen ist.

9. Schutzeinrichtung nach einem der Ansprüche 4 bis 8, bei der der Stromkreis gegenüber Widerständen des Elektromotors und einer Endstufe hochohmig ist.

10. Schutzeinrichtung nach einem der Ansprüche 4 bis 9, bei der der Stromkreis **dadurch** gebildet ist, dass mindestens zwei Motorphasen zwischen dem Elektromotor und der Sternpunktauftrennung gegeneinander mittels Widerständen kurzgeschlossen sind.

11. Schutzeinrichtung nach einem der Ansprüche 1 bis 10, bei der zum Schließen des Stromkreises eine Body-Diode der Sternpunkt-Feldeffekttransistoren verwendet ist.

12. Schutzeinrichtung nach einem der Ansprüche 1 bis 11 und 5, bei der die geglättete Spannung zum Schalten einer Batteriespannung dient.

13. Verfahren zum Schutz für eine Hilfskraftlenkung, mit einer Schutzeinrichtung, insbesondere einer Schutzeinrichtung nach einem der Ansprüche 1 bis 12, bei der die Schaltung die Sternpunktauftrennung (18) schließt, wenn die Drehzahl des Elektromotors (14) einen vorgegebenen Wert übersteigt.

## Claims

1. Protection device for a power steering system of a motor vehicle, with the power steering system having an electric motor (14) with star point opening means (18), having a circuit which is connected to the electric motor (14), **characterized in that** the circuit can close the star point opening means (18) when the rotation speed of the electric motor (14) exceeds a predefined value.

2. Protection device according to Claim 1, in which field-effect transistors of a power output stage can also be closed.

3. Protection device according to Claim 1 or 2, in which the predefined rotation speed is selected such that the motor vehicle can still be reliably steered even when the electronics are switched off.

4. Protection device according to Claim 3, in which the predefined rotation speed is selected such that a steering wheel can be turned at at least 90°/s.

5. Protection device according to one of Claims 1 to 4, in which the circuit is designed in such a way that a closed electric circuit is produced for a voltage which is generated by the electric motor.

6. Protection device according to Claim 5, in which the motor voltage is smoothed and serves as a reference signal for the rotation speed.

7. Protection device according to Claim 4 or 5, in which the generated voltage can be used to close the field-effect transistors of the star point.

8. Protection device according to Claim 4 or 5, in which the generated voltage can be used to switch a second voltage.

9. Protection device according to one of Claims 4 to 8, in which the electric circuit has a high impedance compared to resistors of the electric motor and of an output stage.

10. Protection device according to one of Claims 4 to 9, in which the electric circuit is formed by at least two motor phases between the electric motor and the star point opening means being short-circuited with respect to one another by means of resistors.

11. Protection device according to one of Claims 1 to 10, in which a body diode of the star point field-effect transistors is used to close the electric circuit.

12. Protection device according to one of Claims 1 to 11, in which the smoothed voltage serves to switch a battery voltage.

13. Method for protecting a power steering system, having a protection device, in particular a protection device according to one of Claims 1 to 12, in which the circuit closes the star point opening means (18) when the rotation speed of the electric motor (14) exceeds a predefined value.

## Revendications

1. Dispositif de protection pour système de direction assistée d'un véhicule automobile, dans lequel le système de direction assistée comprend un moteur électrique (14) avec séparation du point neutre (18), comprenant un circuit qui est relié au moteur électrique (14), **caractérisé en ce que**
le circuit peut fermer la séparation du point neutre (18) si la vitesse de rotation du moteur électrique (14) dépasse une valeur prédéterminée.

2. Dispositif de protection selon la revendication 1, dans lequel des transistors à effet de champ d'un amplificateur de puissance doivent en outre être fermés.

3. Dispositif de protection selon la revendication 1 ou 2, dans lequel la vitesse de rotation prédéterminée est choisie de manière à ce que le véhicule automobile puisse aussi encore être conduit en toute sécurité lorsque l'électronique est désactivée.

4. Dispositif de protection selon la revendication 3, dans lequel la vitesse de rotation prédéterminée est choisie de manière à ce qu'un volant de direction puisse être tourné d'au moins 90°/s.

5. Dispositif de protection selon les revendications 1 à 4, dans lequel le circuit est conçu de manière à former un circuit fermé pour une tension générée par le moteur électrique.

6. Dispositif de protection selon la revendication 5, dans lequel la tension du moteur est lissée et joue le rôle de signal de référence pour la vitesse de rotation.

7. Dispositif de protection selon la revendication 4 ou 5, dans lequel la tension générée doit être utilisée pour la fermeture des transistors à effet de champ du point neutre.

8. Dispositif de protection selon la revendication 4 ou 5, dans lequel la tension générée doit être utilisée pour coupler une seconde tension.

9. Dispositif de protection selon l'une des revendications 4 à 8, dans lequel le circuit est à haute impédance par rapport à des résistances du moteur électrique et d'un amplificateur de puissance.

10. Dispositif de protection selon les revendications 4 à 9, dans lequel le circuit est formé de telle manière qu'au moins deux phases du moteur soient mutuellement court-circuitées par des résistances entre le moteur électrique et la séparation du point neutre.

11. Dispositif de protection selon les revendications 1 à 10, dans lequel une diode parasite des transistors à effet de champ du point neutre est utilisée pour la fermeture du circuit.

12. Dispositif de protection selon l'une des revendications 1 à 11, dans lequel la tension lissée est utilisée pour le couplage d'une tension de batterie.

13. Procédé pour la protection d'un système de direction assistée, comprenant un dispositif de protection, notamment un dispositif de protection selon l'une des revendications 1 à 12, dans lequel le circuit ferme la séparation du point neutre (18) lorsque la vitesse de rotation du moteur électrique (14) dépasse une valeur prédéterminée.
